# EUROPEAN PATENT SPECIFICATION

(11) **EP 2 515 497 B1**
(45) Date of publication and mention of the grant of the patent: **04.07.2018**
(21) Application number: 11162916.8
(22) Date of filing: 18.04.2011
(51) Int. Cl.: H04L 29/06, H04W 12/06, G06F 21/32

(54) **Method for performing authentication in a distributed authentication system and authentication system**
Verfahren zur Authentifizierungsdurchführung in einem verteilten Authentifizierungssystem und Authentifizierungssystem
Procédé d'exécution d'authentification dans un système d'authentification distribué et système d'authentification

(43) Date of publication of application: 24.10.2012
(73) Proprietor: Blessing, Werner, 6048 Horw (CH)
(72) Inventor: Blessing, Werner, 6048 Horw (CH)
(74) Representative: Rutz & Partner

(56) References cited:
- US-A1- 2002 194 003
- US-A1- 2010 122 333
- US-A1- 2010 192 209

## Description

The present invention relates to a method for performing authentication in a distributed authentication system and to a distributed authentication system.

### BACKGROUND OF THE INVENTION

People nowadays use various services provided by large service providers, such as a banks or warehouses, or small service providers, such as public vending machines, protected cars and computers networks. In order to protect said service providers from unlawful exploitation, various authentication mechanisms have been introduced. A user may hold an identity card, a credit card, a key and credentials, such as passwords and biometric data that are selectively supplied to the concerned service provider for authentication purposes. Management of all the authentication means typically creates severe problems. Authentication means may physically get lost or mislaid, may require renewal, may be weak and unreliable, may be complicated to handle or may be misused or forged by third parties. Consequently, the system of using a plurality of authentication mechanisms suffers from two major weaknesses. On the one hand, in spite of the diversity, each of the authentication mechanisms remains vulnerable to attacks. On the other hand, maintaining authentication means available and updated requires considerable efforts so that the necessary maintenance is often neglected.

Using a system with a single authentication means, such as a password, for accessing a plurality of service providers facilitates handling and updating procedures. However, in view of the enormous capabilities that are assigned to such a single authentication means, reliability of such a system scarcely suffices the requirement of high-level transactions that include for example bank transfers.

US 2007/0192484 A1 describes a distributed authentication system that allows a user to use a service with safety and without performing complicated authentication processing. When a user of a terminal uses services provided by a plurality of service distributors, it is required to perform authentication processing for each service distributor in order to retain security. Generally, the user would therefore be required to perform different complicated authentication procedures for each service. In order to solve this problem, a distributed authentication system is recommended including a terminal, a communication control apparatus and a service provider, which are connected to one another through a communication network. The communication control apparatus, which controls the communication within the system, includes a judgment module for judging whether to approve an access request from the terminal to the server. The judgment module calculates a security level for the access request and requests the terminal to retrieve detailed information corresponding to the calculated security level, and approves the access request by authenticating the terminal of an access request source based on the detailed information received from the terminal. In practice, a terminal transmits an access request, containing information about the terminal and the requested content, to the communication control apparatus, which performs authentication procedures accordingly. If it is not possible to authenticate the terminal as eligible with the information contained in the access request, the communication processing apparatus requests the terminal to transmit further information, such as a password.

Authentication procedures according to this method therefore still involve considerable efforts without ensuring an authentication confidence with the described measures that would satisfy high-level transactions. Requesting further information, such as a password, typically provides only small increases in authentication confidence, while raising the risk of increasing the rate of false negatives, i.e. the rejection of lawful users, who may need to repeat authentication procedures several times. In particular, the system is still vulnerable to men-in-the-middle attacks, since the impostor who tries to replace the lawful user has no further barrier in his way.

US2002/0194003A1 discloses a client-server security system with a client system that performs a first level security authorization procedure based on first biometric data and a server system that performs a second level security authorization procedure based on second biometric data. In the event that the first and second level authorization procedures have successfully been performed the server system provides access to remote resources via a network.

US2010/122333A1 discloses a method for providing a single sign-on service. Upon requesting access to a resource, the user is redirected to a single sign-on authentication service to logon. In its interaction with the authentication service, the end-user provides the necessary authentication credentials. The authentication service verifies the authentication credentials and returns an authentication ticket containing an identification of the authenticated user, the obtained authentication trust level and a unique ticket identifier.

It is therefore an object of the present invention to provide an improved method for performing authentication in a distributed authentication system and an improved distributed authentication system.

Particularly, it is an object to provide a method that on the one hand further reduces authentication complexity for the user and on the other hand significantly increases complexity of the authentication system for an attacker, particularly for a man-in-the-middle.

Further, the inventive method shall have a high scalability so that the authentication mechanisms can easily be adapted to required levels, allowing performing authentication for low-level transactions with least efforts and authentication for high-level transactions with standard or even reduced efforts, thus overall providing a very secure and efficient system.

Further, the inventive method shall have a high flexibility so that modifications and new configurations can easily, preferably randomly and automatically, be achieved, thus creating further strong obstacles to the attacker. The method and the distributed authentication system allow efficient authentication of users of a distributed authentication system that comprises at least one client station such as a mobile phone e.g. operating according to the GSM- or UMTS-standard, an authentication server and at least one service provider that are connected or connectable to one another via at least one communication network.

The inventive method and system is set out in the independent claim 1 and 15, respectively. The inventive method therefore uses all distributed resources of the distributed authentication system to efficiently and reliably authenticate a subscriber or user. Authentication processes are implemented in the centralised authentication server and in the client stations making it difficult for an impostor or attacker to deceive the system.

Seen from the attacker, the inventive method operates with a power of two and not only with a linear increase of trust. The inventive method tackles and counters the most critical attacking methods, such as man-in-the-middle attacks, creating an authentication complexity, which is extremely difficult to handle for an attacker and at the same time does not burden the user. Due to the implementation of interacting authentication mechanisms in the client station and the authentication server, flexibility and scalability are reached that allow efficient implementation of the inventive method for the complete bandwidth of authentication applications. The complexity of the interacting central and peripheral authentication mechanisms can selectively be reduced for low level transactions, such as simple access control, or increased to the highest level required for high-level transactions, such as bank transactions. With changes of the configuration of the authentication mechanisms and their interactions the authentication system can be changed completely so that an attacker will not be able to rely on historical data.

The inventive authentication system can be used for securely handling high-level transactions but also allows access control for entities that require a comparatively low level of security, e.g. to entities, such as cars, that are typically protected by conventional keys systems. In this respect the client station, typically a mobile phone, replaces the car key and at the same time provides a higher level of security. The inventive authentication system therefore allows secure execution of transactions over the complete bandwidth of security requirements. At the same time the inventive authentication system individually adapts the complexity of the authentication procedures to the required level of authentication confidence.

A first and important authentication step is performed by the client station that does not enter the distributed authentication system or network if the local trust level established by the client station is below a local threshold. Hence, when the authentication server receives a request from the client station, a significant authentication confidence is already established. Preferably, the local trust level established in the client station is communicated to the authentication server, which may accept or fully or partially reject a service request if the local trust level is considered insufficient. If the local trust level is insufficient the authentication server may block the related client station completely and may inform the other system entities accordingly.

For low-level transactions, the authentication server, in compliance with an agreement with the user, can rely on the local trust level communicated by the client station and grant the requested services without further authentication.

If the local trust level and/or the central trust level are considered insufficient for granting a service request, then the authentication server will return an authentication request to the client station preferably with instructions defining the authentication procedures required.

Together with the instructions the authentication server can send a challenge, such as a word or sentence, to the client station, requesting audio data and/or video data of the spoken response. Preferably, audio data and video data are requested that correspond to one another.

Most preferably, challenge response procedures with multimodal biometric authentication are performed according to a method as described in EP1962280A1. According to this method the registration of a user involves the process of simultaneously capturing and storing biometric audio and video samples for a large number of speech elements or speech segments expressed by the user. The speech elements and speech segments are selected in such a way that they can be assembled to form numerous words or sentences that can be used as challenges. Later on, when the user requests services and transactions from a service provider, such a challenge can be sent to the user requesting a corresponding response for which biometric audio and video samples are simultaneously captured. Hence, the authentication server can assemble the challenge based on the audio and video samples that were captured during registration and compare this challenge with the response provided by the user during an authentication process. With the inventive method, which allows randomly assembling practically any challenge, a strong authentication can be achieved with an equal error rate of zero over a wide range.

In a preferred embodiment, this method is also implemented in the client station. For this purpose, registration data may be copied from the database of the authentication server or the registration server to the database provided in the client station.

When fully using said method a high authentication confidence can be achieved for the actual user by the authentication server and by the client station.

If the prestored biometric data, that was taken from the database and assembled according to the selected challenge, and the biometric data that are captured for the user's response match, then a high authentication confidence is reached. The authentication server can therefore assign a maximum trust level to the client station, which is sufficient to meet the security demand of service providers for any high-level transaction, such as a bank transfer. In order to reach maximum authentication confidence said preferred biometric authentication is performed by the client station by itself and by the authentication server by means of the client station, which captures and forwards the biometric data of the response provided to the challenge received from the authentication server.

If a lower trust level is sufficient, the authentication server or the client station may perform an authentication with reduced strength. In this event only audio data or video data may be processed. For example, simple voice recognition or speech recognition procedures may be applied.

The authentication module implemented in the client station preferably runs in the background when the client station is used so that authentication confidence and a corresponding local trust level can be maintained continuously. The authentication module may be configured to allow only one user to use the client station. Hence, if the client station gets lost and is used by a third party the authentication module may shut down the system.

With each service request the value of the local trust level is preferably transferred to the authentication server. With this measure the authentication server obtains information from the client station indicating whether the actual user has passed preliminary authentication. This preliminary authentication may be sufficient to provide low-level services to the user without performing further authentication. For example the authentication server may release orders with a value below an amount specified by the user. In a restaurant the user may initiate payment of the bill electronically without a credit card simply by entering the due amount into a template dedicated to this restaurant and send it together with credentials that include the value of the local trust level to the authentication server. Upon receipt of the executed template the authentication server may initiate payment and may send payment confirmation to the restaurant, e.g. to an e-mail address indicated in the template. The authentication server may therefore be incorporated or run as a part of a large service provider, such as a credit card company.

In another preferred embodiment, the local trust level tracked in the client station and the central trust level tracked in the authentication server are synchronised whenever a service has been requested or whenever a central authentication procedure has been performed.

The value of the local trust level is replaced by the value of the central trust level after a central authentication procedure has been performed. The value of the central trust level is replaced by the value of the local trust level or a fraction thereof if the local trust level is higher than the central trust level. Preferably, the accepted value of the local trust level or fraction thereof he is always kept below a safety value that represents the maximum trust that is assigned to the authentication mechanisms of the client station.

With each synchronisation the updated values are preferably provided with a timestamp. Based on the timestamp the service provider can decide whether the local trust level forwarded with a service request is sufficient. A service provider may for example accept a low local trust level if the timestamp lies within a specific time frame, whose width is reverse proportional to the level of the transaction value.

According to the invention, each service provider can specify its own requirements. The group of service providers can advantageously include the user, who possesses assets, such as a car or a house that provide transport and housing services. Consequently, such an asset also represents a service provider, which in principle does not differ from any other service provider and can be handled likewise.

Service providers can be online connected to the authentication server or can be operated off-line, requesting the required data from the client station that acts for the authentication server as a relay station. Service providers can be online and off-line in specific time periods. When a service provider is off-line, information may be requested from the client station that has stored data such as the central trust level reported by the authentication server. In this respect the distributed use of central and local authentication mechanisms and their interaction is of special benefit.

Messages exchanged over the distributed authentication network are preferably structured according to a proprietary communication protocol. Each message comprises a frame and content. The service provider may therefore look up the local trust level value and/or the central trust level value in specific sections of the transferred frame.

In a preferred embodiment, the central trust level is reduced to a minimum value if central authentication fails. This minimum value can be predetermined by the user and lies below or is independent from the threshold values provided by the service providers. Hence, the user can determine which services or private assets can still be used if the authentication fails. For example a value can be selected that is still sufficient for accessing a building or a car.

In a preferred embodiment the authentication server communicates the current central trust level to the service providers preferably with a time of expiry. Therefore, with a single authentication at the authentication server all or part of the services are available to the user. This is typically of advantage in large companies, where an employee or user is entering the building in the morning and is authenticated for example at the entrance of the building. The authentication server located for example within the company's premises then transfers the central trust level to all service providers located within the company. The assigned and distributed central trust level enables the employee to access various rooms in the building that require no higher trust level, to use corresponding equipment, e.g. to access the computer system to the specified level or to purchase goods in the company's shops or cantina. However, if authentication fails, then all these services may be barred. The inventive authentication system is therefore efficient and flexible.

In an important embodiment the authentication server forwards authentication data resulting from authentication processes, such as the central trust level or codes, to the client station and to the service providers. The client station can then use said authentication data as credentials in a service request when directly accessing a service provider. As described above, transactions can also be performed off-line by transferring authentication data issued by the authentication server via the client station to the service provider.

In another preferred embodiment the fact is exploited that the user acts within the distributed authentication network and leaves various traces that are compared with historical data and examined for plausibility. In the event that lack of plausibility has been detected, the authentication server can perform various actions. The central trust level and the local trust level can be set to a minimum amount to zero. For the next service request the authentication server can demand strong authentication to ensure that the client station is on the control of the rightful user. Hence, the authentication server reliably protects the service providers attached to the distributed authentication network. At the same time a user that has changed the daily routine behaviour is not burdened with special actions but simply with authentication procedures.

The authentication server may use information provided by the user as a reference. For example, if the user has stated that he will typically arrive at eight o'clock at the company, then an arrival at seven o'clock will be treated as unusual behaviour. Preferably, the authentication server accumulates historical data, such as mobility information or habitual service request behaviour in order to check plausibility of a current request. A level of tolerance may be provided, that can be set low for employees with a high responsibility and high for employees that have only a limited access. Hence, for an employee with a high responsibility a strong authentication will be required as soon as occurrences are detected that do not match the typical pattern of behaviour.

In the event that contradictions are detected in the behaviour, the central and local trust levels may immediately be reduced or cancelled and the client station may be barred from entering the distributed authentication system.

In a further preferred embodiment, the authentication server is reducing the value of the central trust level and the client station is reducing the value of the local trust level continuously in time or stepwise after a high-level transaction has taken place. The authentication system may for example prescribe that each high-level transaction requires strong authentication. Hence, after a trust level has been reached to perform a high-level transaction and said high-level transaction has been executed, then the trust level is immediately reduced to a value that is insufficient to access an additional high-level transaction.

### BRIEF DESCRIPTION OF THE DRAWINGS

Some of the objects and advantages of the present invention have been stated, others will appear when the following description is considered together with the accompanying drawings, in which:
- Fig. 1: shows an embodiment of an inventive distributed authentication system with a client station 1, an authentication server 2 and several service providers 31, 32, 33, 34 that are interconnected via a plurality of networks 51, 52, 53₁, 53₂, 53₃;
- Fig. 2: shows message transfers within the distributed authentication system shown in figure 1;
- Fig. 3: shows a further message transfers and activities within the distributed authentication system shown in figure 1;
- Fig. 4: the registration of a user at the authentication server 2 that is used by a registration authority; and
- Fig. 5: the client station 1 more detailed.

### DETAILED DESCRIPTION OF THE PREFERRED EMBODIMENTS

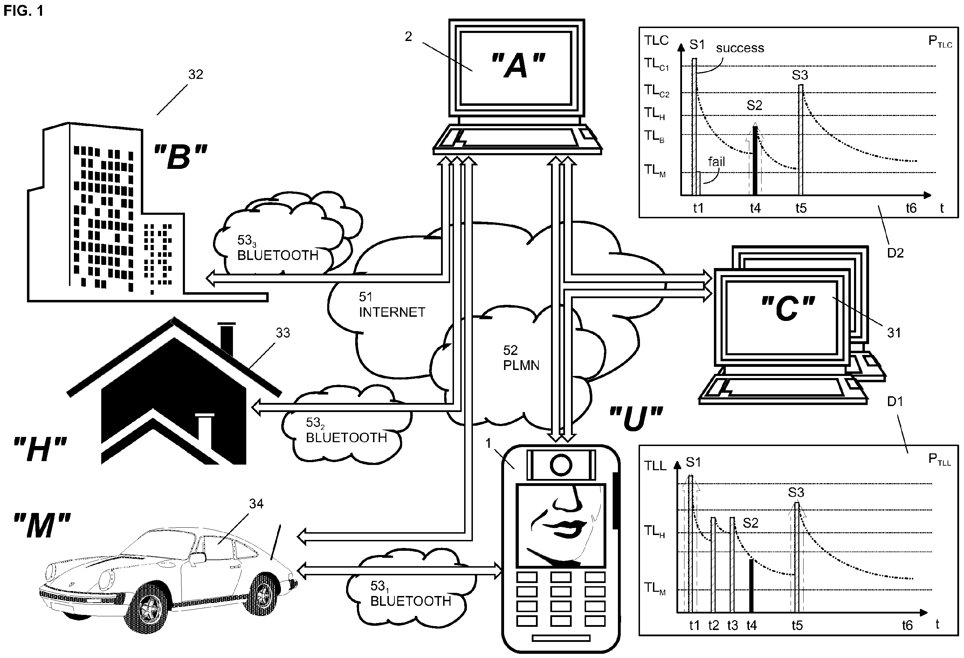

Fig. 1 shows an embodiment of an inventive distributed authentication system with a client station 1, an authentication server 2 and several service providers 31, 32, 33, 34 that are interconnected via a plurality of networks 51, 52, 53₁, 53₂, 53₃. Typically service providers 31, 32, 33, 34 and client stations 1 can be attached to the distributed authentication system in unlimited number. The system may also comprise more than one authentication server 2 in order to support load sharing or to handle dedicated service requests. The communication and data transfer between said system entities 1, 2, 31, 32, 33, 34 may be performed over a single or a plurality of networks of any kind, such as the Internet that may be based on any carrier network including mobile communication networks and ad hoc networks operating for example according to the Bluetooth standard.

The service providers 31, 32, 33, 34 are examples of all service providers and private and/or public security devices that are used by the user and owner of the client station 1 to protect his property. For example, the user has a house 33 and a car 34 that are protected by security devices that deny access to third parties. The user may work in a company 32, in which the access to the company building, specific areas within the building and the computer systems are protected by security devices and mechanisms, including software modules. The user may also be client of banks, warehouses and supermarkets, which are represented in figure 1 by terminal 31. Service requests that reach terminal 31 are processed if the user has been authenticated with the required authentication confidence.

As soon as the required agreements or contracts are available, the services of said service providers 31, 32, 33, 34 can be obtained or ordered by the user via a single device, namely the client station 1. In this way, the user can control and administer all his private and public transactions with the client station 1 that typically corresponds to a mobile phone, a mobile assistant, a tablet computer or to a stationary computing device, which comprise data processing and storage means and peripheral devices that support a connection to said networks 51, 52, 53₁, 53₂, 53₃. According to instructions of the user, the client station 1 may store all or a part of the transactions that were executed within the distributed authentication system in a protocol file.

For the authentication of the user in the distributed authentication network, the following steps are performed.

The client station 1 performs local authentication procedures in order to authenticate the user of the client station 1. Further, the client station 1 is establishing or tracking a variable local trust level TLL that reflects the result of the local authentication procedures. As soon as a required local trust level has been reached that lies above the first local threshold, the client station 1 can access the distributed authentication system.

The authentication server 2 performs central authentication procedures in order to authenticate the user of the client station 1. Further, the authentication server 2 is establishing or tracking a variable central trust level TLC for the client station 1 indicating the result of the central authentication procedures.

The authentication server 2 or the service provider 31, 32, 33, 34 is then comparing the central trust level TLC with a central threshold TL_{B}; TL_{H}; TL_{C1} TL_{C2} assigned to the requested service and is providing access to the related services only, if the central trust level TLC lies above the central threshold TL_{B}; TL_{H}; TL_{C1} TL_{C2}.

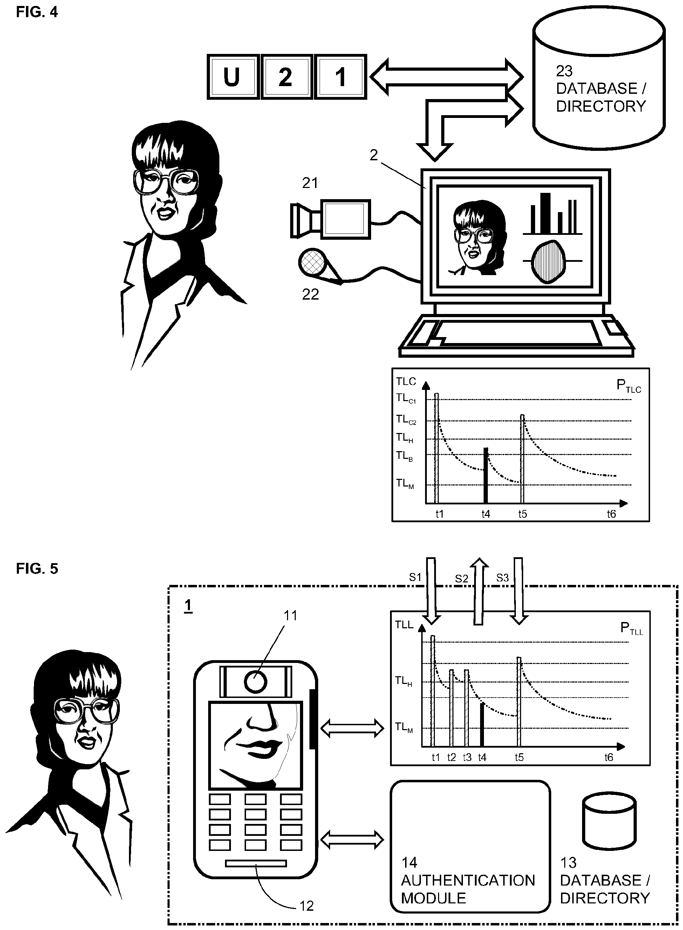

Figure 1 shows protocols P_{TLL}, P_{TLC} of the traces of the local and central trust levels TLL, TLC in separate diagrams D1 and D2. It is shown that local authentication procedures are performed independently from the central authentication server. Local authentication is preferably performed whenever the client station 1 is used. Preferably biometric authentication procedures are applied, that gathers and analyse specific biometrics such as the voice, the face or a fingerprint of the user. Preferred biometric authentication procedures have been summarised above and will briefly be described with reference to figures 4 and 5.

Hence, local authentication procedures may be performed by the client station 1 without any burden or even without being noticed by the user. With local authentication procedures already a comparably high authentication confidence can be achieved. Diagram D1 shows the progression of the local trust level TLL indicating that at time t1 a strong central authentication has been performed, which took the central trust level TLL above the highest threshold value TL_{C1}, which must be exceeded in order to execute high-level transactions or access related services. Since information of a strong user authentication is available, this information is not only applied to the requested transaction, but also transferred to the client station 1, where the value of the local trust level TLL is adjusted accordingly. Hence, at the time t1 the user is authenticated and the trust levels TLL, TLC are synchronised in step S1. An equivalent synchronisation step S3 is taking place at a time t5.

However, if authentication fails, the central trust level TLC and the local trust level TLL would be reduced to zero or to a level TL_{M} selected by the user. This would allow the user to obtain a minimum of services, if strong authentication fails. For example low-level services, such as access to the car or a building, would not be barred. Hence, the inventive method allows applying authentication mechanisms and consequences of the authentication selectively.

It is also shown that the values of the local trust level TLL and the central trust level TLC are reduced stepwise or continuously over time in order to meet the reduction of authentication confidence. Typically a decrease will be exponentially so that the trust levels TLL, TLC initially will rapidly decay and later on will decrease only slowly. After a high-level transaction has been executed, the central trust level will preferably decay with a step to a level that inhibits executing an additional high-level transaction.

At times t2 and t3 the client station 1 has been used and the user has automatically been authenticated by means of the authentication module running in the background. Consequently the value of the local trust level TLL has risen above the value of the central trust level TLC. At time t4, the client station 1 sent a service request to the authentication server 2 with the local trust level TLL being higher than the central trust level TCL. With the acceptance of the local trust level TLL the authentication server 2 adjusted the central trust level TLC accordingly in synchronisation step S2. Since local authentication provides considerable authentication confidence, the authentication system 2 preferably accepts requests in the medium or lower range of transaction values. However, the authentication server avoids an increase to a level that would be in contradiction to agreements and instructions received from the service providers 31, 32 and the user.

In preferred embodiments, the result of the authentication processes is communicated to the other entities of the distributed authentication system, particularly to the service providers 31, 32, .... The other system entities may accept the authentication results that preferably are combined with a timestamp. For example the service providers 31, 32, ... are opening a time window, within which the client station 1 may file requests that are granted. In the event that the user is an employee of company "B" shown in figure 1, authentication may be performed at the entrance and a specific user profile may be opened that defines user rights and corresponding validities that can be activated by means of the client station 1. The user profile may also combine the grant of specific services with an authentication of any desired level of strength. The application implemented in the client station, e.g. a Java application with numerous midlets, as it is typically installed in mobile phones, preferably controls all user actions in the distributed authentication network and requests all required actions from the user. The user who has been authenticated at the entrance may therefore be requested under the guidance of a Java-Application to perform any authentication when requiring a higher-level service. The application of Java-technology in mobile stations is known for example from M. Frei, R. Wittwer, B. Studer, J2ME-Tutorial (Java 2 Micro Edition), University of applied sciences, Chur, Switzerland, published March 10, 2004.

A security profile and exceptions for the user can easily be programmed and implemented. In comparison to the complexity of the security mechanisms, with which an attacker is confronted, the required communication between the entities of the distributed authentication system remains rather simple. Changes of the authentication strategies for local and central authentication can easily and even randomly be arranged. Most preferably the distributed authentication system preferably uses dual authentication by the authentication server 2 and the client station 1. The authentication server 2 may challenge the user to speak a word or sentence, which then is individually analysed by the authentication server 2 and the client station 1, which may communicate authentication results over the same or preferably over a separate channel.

The attacker, particularly a man in the middle, will therefore fail to overcome the problem of betraying the authentication mechanisms acting in the client station 1, the authentication mechanisms acting in the authentication server 2 and the authentication mechanism, which is based on the comparison of the authentication results obtained in the client station 1 and in the authentication server 2.

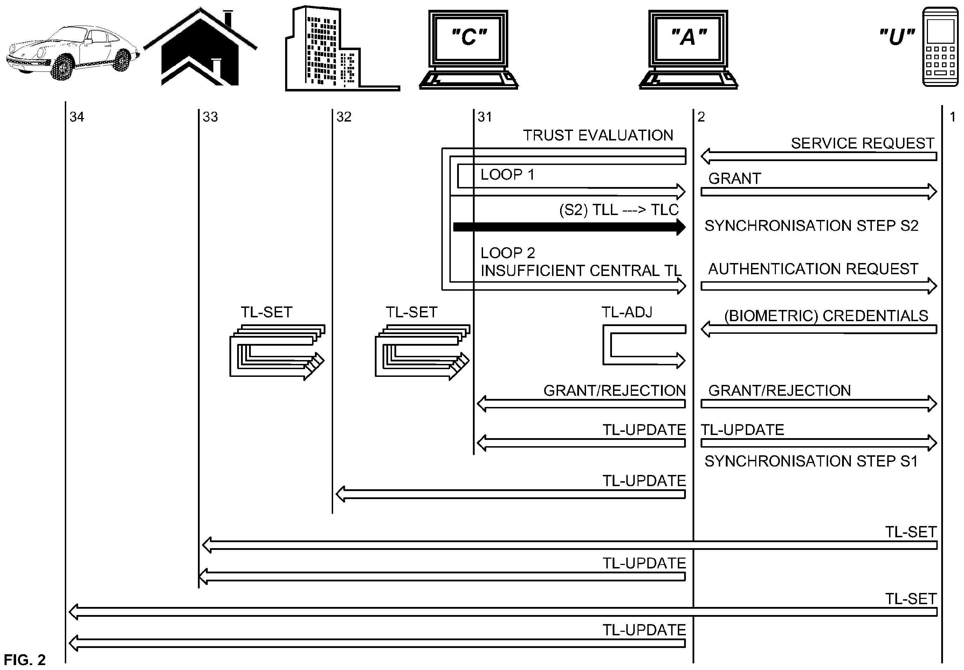

Figure 2 shows possible communications in the distributed authentication network that are initiated with a service request of the user. The service request is sent from the client station 1 to the authentication server 2 or to the related service provider 31, 32, ..., which routes the service request to the authentication server 2. Depending on the service request the authentication server 2 enters at least a first or a second loop. If the central trust level TLC for this client station 1 is considered sufficient the requested service is granted (1^{st} loop) .

With the service request the client station 1 may forward the value of the local trust level TLL that may be higher than the central trust level TLC and may be sufficient to grant the requested service. The authentication server 2 may accept the value of the local trust level TLL or a fraction therefrom as a new central trust level TLC. This is especially advantageous if the user has been absent, e.g. abroad on a business trip, and returns back to the company building. Since the user has frequently used the client station 1, the local trust level TLL will typically be rather high. Hence, the authentication server 2 may rely on the authentication confidence established in the client station 1 and may provide the user access to the company building without additional authentication. Consequently the authentication server 2 can be dedicated to other tasks that require strong authentication.

In the event that the local trust level TLL and the central trust level TLC are not considered sufficient for the requested service, then the authentication server 2 will send an authentication request to the client station 1 asking for standard authentication or modified authentication, if the authentication module in the client station 1 supports two or more modes of authentication. Depending on the required strength of authentication and the required central trust level TLC, the authentication server 2 may request voice or face recognition or a combination thereof.

The required value of the central trust level TLC is depending on the requested service for which a threshold has been set by the service provider. Any service provider, including the user, who has incorporated private assets into the distributed authentication system, may set a fixed or variable threshold that alters in function of an occurrence, e.g. the change of time and date.

According to the result of the authentication process the authentication server 2 grants or rejects the service request. The authentication server 2 then distributes messages to the service providers 31, 32, 33, 34 and to the client station 1, providing information relating to the result of the authentication, preferably an update of the central trust level TLC, i.e. the authentication confidence the authentication server 2 has established for the user station 1.

Therefore, with a single authentication, the authentication server 2 updates the distributed authentication system or network so that the user can profit from the authentication process that is performed not only for one but for a plurality of transactions. This makes it possible that the client station 1 can directly access service providers 31, 32, 33, 34 even then, if they are not online connected to the authentication server 2 later on. The user may enter the company car 34 at the company premises and later on, when the car is parked at another company's premises. As soon as the service provider 31, 32, 33, 34 gets online again, then new status data can be downloaded from the authentication server 2, before the stored trust level has decayed and the service is barred.

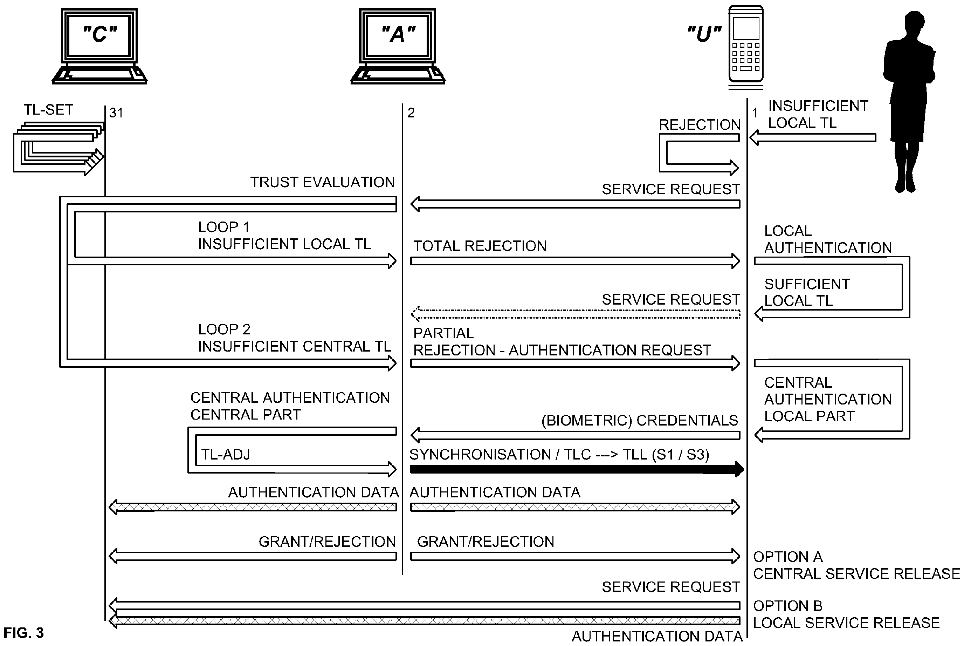

Figure 3 shows further message transfers and activities within the distributed authentication system. In this example, the user tries to despatch a service request, while the local trust level TLL in the client station 1 is insufficient for this purpose. Figure 3 illustrates both possible reactions. Preferably the client station 1 directly rejects the service request. If the service request has however been despatched together with the value of the insufficient local trust level TLL, then the authentication server 2 will return a total rejection, asking the client station 1 to perform local authentication.

Loop 2 illustrates the case in which the local trust level TLL is sufficient, but the central trust level TLC is insufficient. In this case the client station 1 can access the distributed authentication system, but receives a rejection from the authentication server 2 as described above.

It is illustrated that the authentication processes are distributed within the distributed authentication system with a local authentication part taking place in the client station 1 and a central authentication part taking place in the authentication server 2 that receives requested credentials from the client station 1, such as biometric data captured from the user.

After completion of the authentication the local and central trust levels TLL, TLC are synchronised in step S1 or S3. The authentication server 2 then distributes authentication data across the distributed authentication system. For example, the authentication server 2 may update the databases used by the system entities, e.g. with biometric data, passwords, and authentication profiles.

Figure 4 relates to the registration of a user at the authentication server 2 that for simplicity also acts as registration authority. For a preferred authentication method the registration process is performed as follows. The client provides credentials to a registration officer who verifies the client's credentials and establishes a non-biometric client profile. Then, in order to establish a biometric client profile, numerous speech elements or speech segments are dictated, which are repeated by the client. For the corresponding speech elements expressed by the client, biometric audio and video samples are simultaneously captured by means of recording devices 21, 22 (e.g. a microphone and a digital camera) and stored in a database 23. In order to enable the authentication server 2 to create all desired challenges all required speech elements, together with the related gestures of lips and tongue, are captured and stored. Typically the client will be asked to repeat all letters of the alphabet as well as all relevant numbers, e.g., 1-100, and 1000. The recorded speech elements can therefore be assembled and concatenated, in order to generate new words or sentences. In addition, information is stored, which identifies the captured biometric elements or data. The authentication server can therefore request the client station 1 at a later stage to provide biometric data for any challenge that may be generated by the authentication server 2. The authentication server 2 can then analyse, whether the audio and video data captured for the response correspond to the assembled audio and video data.

This authentication system is preferably implemented in the client station 1 as well. For this purpose the authentication server 2 may transfer all registration data to the database provided in the client station 1. Duplication of the authentication system requires therefore little effort only.

On the screen of the authentication server 2 a waveform for the word "two" is illustrated as well as a spectrogram of the waveform that represents a typical pattern for this client. The authentication processes may therefore perform speech and voice recognition as required. The authentication server 2 may therefore establish authentication strategies that are altered preferably from service request to service request, asking for local and/or central authentication with specific authentication modes.

Figure 5 shows the client station 1 with an authentication module 14 and a database 13 used for performing the above described authentication procedures. Further shown is a protocol P_{TLL} of the local trust level of figure 1, as well as synchronisation points S1, S2 and S3.

## Claims

1. Method for performing authentication in a distributed authentication system, comprising at least one client station (1); an authentication server (2) and at least one service provider (31, 32, 33, 34) that are connectable to one another via at least one communication network (51; 52; 53₁, 53₂, 53₃) comprising the steps of
a) the client station (1) performing local authentication procedures for the user of the client station (1) and tracking a variable local trust level (TLL) indicating the result of the local authentication procedures and accessing or being provided access to the distributed authentication system only, if the local trust level (TLL) lies above a first local threshold (TL_{M});
b) the authentication server (2) performing central authentication procedures for the user of the client station (1) and tracking a variable central trust level (TLC) for the client station (1) indicating the result of the central authentication procedures;
**characterised by** the steps of
c) the authentication server (2) communicating the obtained central trust level (TLC) to the service providers (31, 32, 33, 34) preferably with a time of expiry;
d) the client station (1) sending a service request directly to a selected service provider (31, 32, 33, 34) ;
e) the selected service provider (31, 32, 33, 34) granting the service request, in the event that the central trust level (TLC) that has been communicated by the authentication server (2) lies above a given threshold.

2. Method according to claim 1, comprising the steps of transferring the value of the local trust level (TLL) together with each service request to the authentication server (2).

3. Method according to claim 1 or 2, comprising the steps of synchronising the local trust level (TLL) tracked in the client station (1) with the central trust level (TLC) tracked in the authentication server (2) whenever a service has been requested or whenever a central authentication procedure has been performed.

4. Method according to claim 3, comprising the steps of replacing the value of the local trust level (TLL) by the value of the central trust level (TLC) after a central authentication procedure has been performed or replacing the value of the central trust level (TLC) by the value of the local trust level (TLL) or by a maximum value allowed by the service provider (31, 32, 33, 34) if the local trust level (TLL) is higher than the central trust level (TLC).

5. Method according to claim 4, comprising the steps of storing a corresponding timestamp whenever authentication procedures or a synchronisation of the local trust level (TLL) and the central trust level (TLC) have been performed.

6. Method according to one of the claims 1-5, comprising the steps of reducing the central trust level (TLC) to a minimum value that has been predetermined by the user and that lies below the threshold values provided by the service provider (31, 32, 33, 34), if central authentication fails.

7. Method according to one of the claims 1-7, comprising the steps of the authentication server (2) tracking the behaviour of the client station (1) and reducing the central trust level in the event that unusual contradictory behaviour is detected.

8. Method according to claim 7, comprising the steps of using accumulating historical data, such as mobility information or habitual request behaviour, and/or information provided by the user in order to check plausibility of the current request.

9. Method according to one of the claims 1-8, comprising the steps of the authentication server (2) performing authentication procedures if the central trust level (TLC) is below the trust level (TL_{X}) to be met for a requested service.

10. Method according to one of the claims 1-9, comprising the steps of the authentication server (2) reducing the central trust level (TLC) and the client station (1) reducing the value of the local trust level (TLL) continuously in time or stepwise after a high-level transaction has taken place to a value that is insufficient to access high-level transactions.

11. Method according to one of the claims 1-10, comprising the steps of the authentication server (2) using multimodal biometric authentication by
a) registering the user of the client station (1) at the authentication server (2) or a related registration authority by recording and storing the user's credentials and capturing biometric data, including audio and video samples that are logically related to one another, in a database (23) of the authentication server (2);
b) for authentication requests setting up a connection between the client station (1) and the authentication server (2) and forwarding biometric data that are captured from the user via input devices (11, 12) of the client station (1) to the authentication server (2) ;
c) authenticating the user by comparing the biometric data received from the client station (1) with corresponding biometric data of the registered owner of the client station (1) that are retrieved by the authentication server (11) from the database (12) and checking whether said biometric data match; and
d) providing a central trust level value that represents the result and the strength of the authentication procedures.

12. Method according to claim 11, comprising the steps of the client station (1) using multimodal biometric authentication by
a) registering the user of the client station (1) at the authentication server (2) or a related registration authority by recording and storing the user's credentials and capturing biometric data, including audio and video samples that are logically related to one another, in a database (13) of the client station (1) ;
b) for authentication requests setting up an authentication session in the client station (1) and forwarding biometric data that are captured from the user via input devices (11, 12) of the client station (1) to an authentication module (14);
c) authenticating the user by comparing the biometric data received from the client station (1) with corresponding biometric data of the registered owner of the client station (1) that are retrieved from the database (13) of the client station (1) and checking whether said biometric data match; and
d) providing a local trust level value that represents the result and the strength of the performed authentication procedures.

13. Method according to one of the claims 1 - 12, comprising the steps of performing challenge response procedures and/or multimodal or monomodal biometric authentication according to a selection that has been specified by the user, the authentication server (2) or the authentication module (14) provided in the client station (1), and performing single authentication by the authentication server (2) or dual authentication ID authentication server (2) and is the client station (1) with a comparison of the authentication results.

14. Method according to one of the claims 1 - 13, comprising the steps of the client station (1) adding authentication data received from the authentication server (2), such as the reported central trust level, to the credentials that are forwarded with a service request to the service provider (31, 32, 33, 34) that has been provided online or off-line by the authentication server (2) with data relating to the authentication data.

15. Distributed authentication system, comprising at least one client station (1) ; an authentication server (2) and at least one service provider (31, 32, 33, 34) that are connectable to one another via at least one communication network (51; 52; 53₁, 53₂, 53₃), said distributed authentication system being designed to operate according to a method as defined in one of the claims 1-14.

## Patentansprüche

1. Verfahren zur Durchführung der Authentisierung in einem verteilten Authentisierungssystem, umfassend wenigstens eine Anwenderstation (1); einen Authentisierungserver (2) und wenigstens einen Dienstleister (31, 32, 33, 34) die über wenigstens ein Kommunikationsnetz (51; 52; 53₁, 53₂, 53₃) miteinander verbindbar sind, umfassend die Schritte
a) die Anwenderstation (1) führt lokale Authentisierungsprozeduren für den Benutzer der Anwenderstation (1) durch und verfolgt ein variables lokales Vertrauensniveau (TLL), welches das Resultat der lokalen Authentisierungsprozeduren anzeigt, und Eintritt oder Zulassung zum Eintritt zum verteilten Authentisierungssystem nur dann, falls das lokale Vertrauensniveau (TLL) oberhalb eines ersten lokalen Schwellwerts (TL_{M}) liegt;
b) der Authentisierungserver (2) führt zentrale Authentisierungsprozeduren für den Benutzer der Anwenderstation (1) durch und verfolgt ein variables zentrales Vertrauensniveau (TLC) für die Anwenderstation (1), welches das Resultat der zentralen Authentisierungsprozeduren anzeigt;
**gekennzeichnet durch** die Schritte
c) der Authentisierungserver (2) kommuniziert das ermittelte zentrale Vertrauensniveau (TLC), vorzugsweise mit einer Verfallzeit, an den Dienstleister (31, 32, 33, 34);
d) die Anwenderstation (1) sendet eine Dienstleistungsanforderung direkt zu einem ausgewählten Dienstleister (31, 32, 33, 34);
e) der ausgewählte Dienstleister (31, 32, 33, 34) gewährt die Dienstleistungsanforderung, falls das zentrale Vertrauensniveau (TLC), welches vom Authentisierungserver (2) kommuniziert wurde, oberhalb eines vorgegebenen Schwellwerts liegt.

2. Verfahren nach Anspruch 1, umfassend die Schritte des Transfers des Wertes des lokalen Vertrauensniveaus (TLL) zusammen mit jeder Dienstleistungsanforderung zum Authentisierungserver (2).

3. Verfahren nach Anspruch 1 oder 2, umfassend die Schritte der Synchronisierung des lokalen Vertrauensniveaus (TLL), das in der Anwenderstation (1) verfolgt wird, mit dem zentralen Vertrauensniveau (TLC), das im Authentisierungserver (2) verfolgt wird, wann immer eine Dienstleistung angefordert wurde oder wann immer eine zentrale Authentisierungsprozedur durchgeführt wurde.

4. Verfahren nach Anspruch 3, umfassend die Schritte des Ersetzens des Wertes des lokalen Vertrauensniveau (TLL) durch den Wert des zentralen Vertrauensniveaus (TLC) nachdem eine zentrale Authentisierungsprozedur durchgeführt wurde, oder des Ersetzens des Wertes des zentralen Vertrauensniveaus (TLC) durch den Wert des lokalen Vertrauensniveaus (TLL) oder durch einen Maximalwert, der vom Dienstleister (31, 32, 33, 34) zugelassen wurde, falls das lokale Vertrauensniveau (TLL) höher ist als das zentrale Vertrauensniveau (TLC).

5. Verfahren nach Anspruch 4, umfassend die Schritte des Speicherns einer korrespondierenden Zeitmarke waren immer Authentisierungsprozeduren oder eine Synchronisation des lokalen Vertrauensniveaus (TLL) und des zentralen Vertrauensniveaus (TLC) durchgeführt wurde.

6. Verfahren nach einem der Ansprüche 1-5, umfassend die Schritte der Reduktion des zentralen Vertrauensniveaus (TLC) auf einen Minimalwert, der durch den Benutzer vorbestimmt wurde und der unterhalb des Wertes des Schwellwerts liegt, der durch den Dienstleister (31, 32, 33, 34) vorgegeben wurde, falls die zentrale Authentisierung versagt.

7. Verfahren nach einem der Ansprüche 1-7, umfassend die Schritte gemäss denen der Authentisierungserver (2) das Verhalten der Anwenderstation (1) verfolgt und und das zentrale Vertrauensniveau reduziert, falls ungewöhnliches widersprüchliches Verhalten detektiert wird.

8. Verfahren nach Anspruch 7, umfassend die Schritte der Verwendung akkumulierter historischer Daten, wie Mobilitätsinformationen oder übliches Antragsverhalten, und/oder vom Benutzer zur Verfügung gestellte Informationen, um die Plausibilität des aktuellen Antrags zu prüfen.

9. Verfahren nach einem der Ansprüche 1-8, umfassend die Schritte, gemäss denen der Authentisierungserver (2) Authentisierungsprozeduren durchführt, falls das zentrale Vertrauensniveau (TLC) unterhalb des Vertrauensniveaus (TL_{X}) liegt, welches für einen Dienstleistungsantrag erforderlich ist.

10. Verfahren nach einem der Ansprüche 1-9, umfassend die Schritte gemäss denen der Authentisierungserver (2) das zentrale Vertrauensniveau (TLC) und die Anwenderstation (1) den Wert des lokalen Vertrauensniveaus (TLL), kontinuierlich im zeitlichen Ablauf oder schrittweise nachdem eine hochwertige Transaktion durchgeführt wurde, auf einen Wert reduzieren der ungenügend ist, um Zugang zu hochwertigen Transaktionen zu erhalten.

11. Verfahren nach einem der Ansprüche 1-10, umfassend die Schritte gemäss denen der Authentisierungserver (2) multimodale biometrische Authentisierung verwendet, indem
a) der Benutzer der Anwenderstation (1) beim Authentisierungserver (2) oder einer zugeordneten Registrierungsautorität registriert wird, indem Referenzdaten des Benutzers sowie aufgenommene biometrische Daten, einschliesslich Audio- und Video-Proben, die logisch miteinander verbunden sind, aufgenommen und in einer Datenbank (23) des Authentisierungservers (2) gespeichert werden;
b) für einen Authentisierungsantrag eine Verbindung zwischen der Anwenderstation (1) und dem Authentisierungserver (2) erstellt wird und biometrischer Daten, die vom Benutzer mittels Eingabevorrichtungen (11, 12) der Anwenderstation (1) aufgenommen wurden, zum Authentisierungserver (2) übertragen werden;
c) Authentisierung des Benutzers durch Vergleich der von der Anwenderstation (1) empfangenen biometrischen Daten mit korrespondierende biometrischen Daten des registrierten Besitzers der Anwenderstation (1), die vom Authentisierungserver (11) aus der Datenbank (12) geladen werden, und Prüfung, ob die genannten biometrischen Daten einander entsprechen; und
d) Erstellen eines Wertes für das zentrale Vertrauensniveau, welcher das Resultat und die Stärke der Authentisierungsprozeduren repräsentiert.

12. Verfahren nach Anspruch 11, umfassend die Schritte gemäss denen die Anwenderstation (1) multimodale biometrische Authentisierung verwendet, indem
a) der Benutzer der Anwenderstation (1) beim Authentisierungserver (2) oder einer zugeordneten Registrierungsautorität registriert wird, indem Referenzdaten des Benutzers sowie aufgenommene biometrische Daten, einschliesslich Audio- und Video-Proben, die logisch miteinander verbunden sind, aufgenommen und in einer Datenbank (23) des Authentisierungservers (2) gespeichert werden;
b) für Authentisierungsanforderungen eine Authentisierungssession in der Anwenderstation (1) durchgeführt wird und biometrische Daten, die vom Benutzer über Eingabevorrichtungen (11, 12) der Anwenderstation (1) aufgenommen wurden, zu einem Authentisierungsmodul (14) übertragen werden;
c) Authentisierung des Benutzers durch Vergleich der von der Anwenderstation (1) erhaltenen biometrischen Daten mit korrespondierenden biometrischen Daten des registrierten Besitzers der Anwenderstation (1), die von der Datenbank (13) der Anwenderstation (1) geladen werden, und Prüfung ob die genannten biometrischen Daten einander entsprechen; und
d) Erstellen eines Wertes für das lokale Vertrauensniveau, welches das Resultat und die Stärke der durchgeführten Authentisierungsprozeduren repräsentiert.

13. Verfahren nach einem der Ansprüche 1 - 12, umfassend die Schritte der Durchführung von Anfrage und Antwortprozeduren und/oder multimodaler oder monomodaler biometrischer Authentisierung gemäss einer vom Benutzer spezifizierten Selektion des Authentisierungservers (2) oder des Authentisierungsmoduls (14) vorgesehen in der Anwenderstation (1), und Durchführung einer einfachen Authentisierung durch den Authentisierungserver (2) oder einer doppelten Authentisierung durch den Authentisierungserver (2) und in der Anwenderstation (1) mit einem Vergleich der Authentisierungsresultate.

14. Verfahren nach einem der Ansprüche 1 - 13, umfassend die Schritte gemäss denen die Anwenderstation (1) vom Authentisierungserver (2) erhaltene Authentisierungsdaten, wie das rapportierte zentrale Vertrauensniveau, zu den Referenzdaten hinzufügt, die mit einer Dienstleistungsanforderung zum Dienstleister (31, 32, 33, 34) übertragen werden, der online oder offline vom Authentisierungserver (2) mit Daten versorgt wurde, die den Authentisierungsdaten entsprechen.

15. Verteiltes Authentisierungssystem, umfassend wenigstens eine Anwenderstation (1); einen Authentisierungserver (2) und wenigstens einen Dienstleister (31, 32, 33, 34), die über wenigstens ein Kommunikationsnetz (51; 52; 53₁, 53₂, 53₃) miteinander verbindbar sind, wobei das genannte verteilte Authentisierungssystem ausgestaltet ist, um gemäss einem Verfahren zu arbeiten, wie es in einem der Ansprüche 1-14 definiert ist.

## Revendications

1. Procédé pour effectuer une authentification dans un système d'authentification distribué, comprenant au moins une station client (1); un serveur d'authentification (2) et au moins un fournisseur de services (31, 32, 33, 34) pouvant être connectés les uns aux autres via au moins un réseau de communication (51; 52; 53₁, 53₂, 53₃) comprenant les étapes de
a) la station client (1) effectuant des procédures d'authentification locale pour l'utilisateur de la station client (1) et suivant un niveau de confiance local variable (TLL) indiquant le résultat des procédures d'authentification locale et accédant ou donnant accès au système d'authentification distribué uniquement, si le niveau de confiance local (TLL) est supérieur à un premier seuil local (TL_{M});
b) le serveur d'authentification (2) exécutant des procédures d'authentification centrale pour l'utilisateur de la station client (1) et suivant un niveau de confiance central variable (TLC) pour la station client (1) indiquant le résultat des procédures d'authentification centrale;
**caractérisé par** les étapes de
c) le serveur d'authentification (2) communicant le niveau de confiance central obtenu (TLC) aux fournisseurs de services (31, 32, 33, 34) de préférence avec un temps d'échéance;
d) la station client (1) envoyant une demande de service directement à un fournisseur de services (31, 32, 33, 34) sélectionné;
e) le fournisseur de services (31, 32, 33, 34) sélectionné validant la demande de service, dans le cas où le niveau de confiance central (TLC), qui a été communiqué par le serveur d'authentification (2), est dessus un seuil défini.

2. Procédé selon la revendication 1, comprenant les étapes de transfert de la valeur du niveau de confiance local (TLL) avec chaque demande de service au serveur d'authentification (2).

3. Procédé selon la revendication 1 ou 2, comprenant les étapes de synchronisation du niveau de confiance local (TLL) suivi dans la station client (1) avec le niveau de confiance central (TLC) suivi dans le serveur d'authentification (2) chaque fois qu'un service a été demandé ou chaque fois qu'une procédure d'authentification centrale a été effectuée.

4. Procédé selon la revendication 3, comprenant les étapes à remplacer la valeur du niveau de confiance local (TLL) par la valeur du niveau de confiance central (TLC) après qu'une procédure d'authentification centrale a été effectuée ou remplacer la valeur du niveau de confiance central (TLC) par la valeur du niveau de confiance local (TLL) ou par une valeur maximale autorisée par le fournisseur de service (31, 32, 33, 34) si le niveau de confiance local (TLL) est supérieur au niveau de confiance central (TLC).

5. Procédé selon la revendication 4, comprenant les étapes de stockage d'un horodatage correspondant chaque fois que des procédures d'authentification ou une synchronisation du niveau de confiance local (TLL) et du niveau de confiance central (TLC) ont été effectuées.

6. Procédé selon une des revendications 1-5, comprenant les étapes à réduire le niveau de confiance central (TLC) à une valeur minimale qui a été prédéterminée par l'utilisateur et qui se situe en dessous des valeurs de seuil fournies par le fournisseur de services (31, 32, 33, 34), si l'authentification centrale échoue.

7. Procédé selon une des revendications 1-7, comprenant les étapes du serveur d'authentification (2) à suivre le comportement de la station client (1) et à réduire le niveau de confiance central (TLC) dans le cas où un comportement contradictoire inhabituel est détecté.

8. Procédé selon la revendication 7, comprenant les étapes à utiliser des données historiques cumulées, telles que des informations de mobilité ou un comportement de demande habituel, et/ou des informations fournies par l'utilisateur afin de vérifier la plausibilité de la demande en cours.

9. Procédé selon une des revendications 1-8, comprenant les étapes du serveur d'authentification (2) effectuant des procédures d'authentification si le niveau de confiance central (TLC) est inférieur au niveau de confiance (TLX) à satisfaire pour un service demandé.

10. Procédé selon une des revendications 1-9, comprenant les étapes du serveur d'authentification (2) à réduire le niveau de confiance central (TLC) et la station cliente (1) réduisant la valeur du niveau de confiance local (TLL) continuellement ou par étapes après qu'une transaction de haut niveau a eu lieu à une valeur insuffisante pour accéder à des transactions de haut niveau.

11. Procédé selon une des revendications 1-10, comprenant les étapes du serveur d'authentification (2) utilisant une authentification biométrique multimodale en
a) enregistrant l'utilisateur de la station client (1) sur le serveur d'authentification (2) ou une autorité d'enregistrement associée en enregistrant et stockant les informations d'identification de l'utilisateur et en capturant des données biométriques, y compris des échantillons audio et vidéo qui sont logiquement liés les uns aux autres, dans une base de données (23) du serveur d'authentification (2);
b) pour des demandes d'authentification établissant une connexion entre la station client (1) et le serveur d'authentification (2) et transmettant des données biométriques qui sont capturées de l'utilisateur via des dispositifs d'entrée (11, 12) de la station cliente (1) au serveur d'authentification (2);
c) authentifiant l'utilisateur en comparant les données biométriques reçues de la station client (1) avec les données biométriques correspondantes du propriétaire enregistré de la station client (1) qui sont récupérées par le serveur d'authentification (2) à partir de la base de données (12) et vérifier si lesdites données biométriques se correspondent; et
d) fournissant une valeur de niveau de confiance centrale (TLC) qui représente le résultat et la solidité des procédures d'authentification.

12. Procédé selon la revendication 11, comprenant les étapes de la station client (1) utilisant une authentification biométrique multimodale en
a) enregistrant l'utilisateur de la station client (1) auprès du serveur d'authentification (2) ou d'une autorité d'enregistrement associée en enregistrant et en stockant les informations d'identification de l'utilisateur et la capture de données biométriques, y compris des échantillons audio et vidéo qui sont logiquement liés entre eux, dans une base de données (13) de la station client (1);
b) pour des demandes d'authentification, établissant une session d'authentification dans la station client (1) et transférant des données biométriques capturées par l'utilisateur via des dispositifs d'entrée (11, 12) de la station client (1) à un module d'authentification (14) ;
c) authentifiant l'utilisateur en comparant les données biométriques reçues de la station client (1) avec les données biométriques correspondantes du propriétaire enregistré de la station client (1) qui sont extraites de la base de données (13) de la station client (1) et vérifier si lesdites données biométriques correspondent; et
d) fournissant une valeur de niveau de confiance locale qui représente le résultat et la solidité des procédures d'authentification effectuées.

13. Procédé selon une des revendications 1 - 12, comprenant les étapes de réalisation de procédures de type réponse/challenge et/ou d'authentification biométrique multimodale ou monomodale selon une sélection qui a été spécifiée par l'utilisateur, le serveur d'authentification (2) ou le module d'authentification (14) fourni dans la station client (1) et effectuant une authentification unique par le serveur d'authentification (2) ou le serveur d'authentification à double authentification ID (2) et la station client (1) avec une comparaison des résultats d'authentification.

14. Procédé selon une des revendications 1 - 13, comprenant les étapes de la station client (1) ajoutant des données d'authentification reçues du serveur d'authentification (2), telles que le niveau de confiance central rapporté, aux informations d'identification transmises avec une demande de service au fournisseur de services (31, 32, 33, 34) qui a été fournie en ligne ou hors ligne par le serveur d'authentification (2) avec des données relatives aux données d'authentification.

15. Système d'authentification distribué, comprenant au moins une station client (1); un serveur d'authentification (2) et au moins un fournisseur de service (31, 32, 33, 34) qui peuvent être connectés l'un à l'autre via au moins un réseau de communication (51; 52; 53₁; 53₂; 53₃), ledit système d'authentification distribué étant conçu pour fonctionner selon un procédé défini dans une des revendications 1-14.
